# EUROPEAN PATENT SPECIFICATION

(11) **EP 0 909 537 B1**
(45) Date of publication and mention of the grant of the patent: **20.04.2005**
(21) Application number: 98830543.9
(22) Date of filing: 17.09.1998
(51) Int. Cl.: A24C 5/34, G01B 11/10

(54) **A unit for checking the transverse dimensions of bar-shaped products**
Einheit zur Überprüfung der transversalen Dimensionen von strangfömigen Gegenständen
Unité pour la vérification des dimensions transversales de produits en forme de tige

(30) Priority: 01.10.1997 IT BO970592
(43) Date of publication of application: 21.04.1999
(73) Proprietor: G.D SOCIETA' PER AZIONI, 40133 Bologna (BO) (IT)
(72) Inventor: Cotti, Maurizio, 40017 San Giovanni in Persiceto,Bologna (IT); Bencivenni, Marco, 40127 Bologna (IT); Neri, Armando, 40139 Bologna (IT)
(74) Representative: Pederzini, Paolo

(56) References cited:
- EP-A- 0 555 875
- EP-A- 0 656 181
- DE-A- 2 448 651
- GB-A- 2 149 101
- US-A- 3 870 890
- US-A- 4 236 534

## Description

The present invention relates to a cigarette making machine comprising a unit for checking and correcting the transverse dimensions of continuous rods.

The invention can be used in particular on twin line cigarette making machines to check the transverse dimensions of continuous rods of cigarette, filter and similar items or of the related lengths of them.

A customary, cigarette rod maker usually envisages an essentially vertical chimney fed from below by a continuous flow of tobacco particles and having at its top end a suction band on which a continuous tobacco rod is formed.

This suction band is designed to feed the continuous tobacco rod along a defined path to a garniture at the infeed end of which the tobacco rod is transferred to a garniture tape which carries the cigarette paper.

The garniture tape wraps the cigarette paper round the tobacco rod to form a cylindrical bar-shaped product or continuous cigarette rod which is fed along a defined path to a cut-off station where this cigarette rod is cut into individual cigarette lengths by a rotary blade cutting device.

Along the above mentioned path, there is usually a checking unit designed to check at least one transverse dimension of the cigarette rod and forming part of a detecting unit which ensures that the diameter of the cigarette rod is to specifications.

An example of the above checking unit is disclosed in the document DE 24 48 651.

The above description also applies to each of the two individual lines of a customary, twin line cigarette making machine where the two lines run parallel at a very short distance from each other for known reasons of functional and structural optimization.

The said checking devices are usually equipped with two optical detectors, each of which is designed to check a transverse dimension of the products in a corresponding given direction. Both the checking devices comprise a light beam emitter and a corresponding receiver placed opposite each other on opposite sides of the path along which the products are travelling. The two emitters are aligned with the corresponding receivers in two different directions at right angles to the above mentioned feed path, incident on the products and with an angular interval between them such that they can generate the signals necessary to indicate the transverse dimensions of the products.

A checking unit of the type described above, although capable of providing a transverse dimension with a satisfactory degree of reliability, is relatively expensive because of the high number of components used and, above all, is too large to be fitted in all cigarette making machines of known kind. In particular, it is usually unsuitable for customary twin-line cigarette making machines because the two lines are so close to each other that there is not enough space between them to arrange the emitter and receivers around the rod in a configuration such as that described above.

The aim of the present invention is to provide a unit for checking the transverse dimensions of essentially cylindrical products that is reliable and, at the same time, simple, economical and small enough to be used both in single and twin line cigarette making machines.

The present invention provides a cigarette making machine comprising a unit for checking the transverse dimensions of continuous rods as they feed along a defined feed path and in a defined direction, the machine comprising all the features expressed in claim 1.

The invention will now be described with reference to the accompanying drawings which illustrate a preferred embodiment and in which:
- Figure 1 is a schematic side view, partially in the form of a block diagram and with some parts cut away to better illustrate others, of a twin line cigarette making machine in which each line is equipped with a preferred embodiment of the unit made according to the present invention;
- Figure 2 is a cross section, with some parts cut away in order to better illustrate others, of a detail of the machine shown in Fig. 1;
- Figure 3 is a plan view, with some parts in cross section and some parts cut away in order to better illustrate others, of the detail shown in Fig. 2.

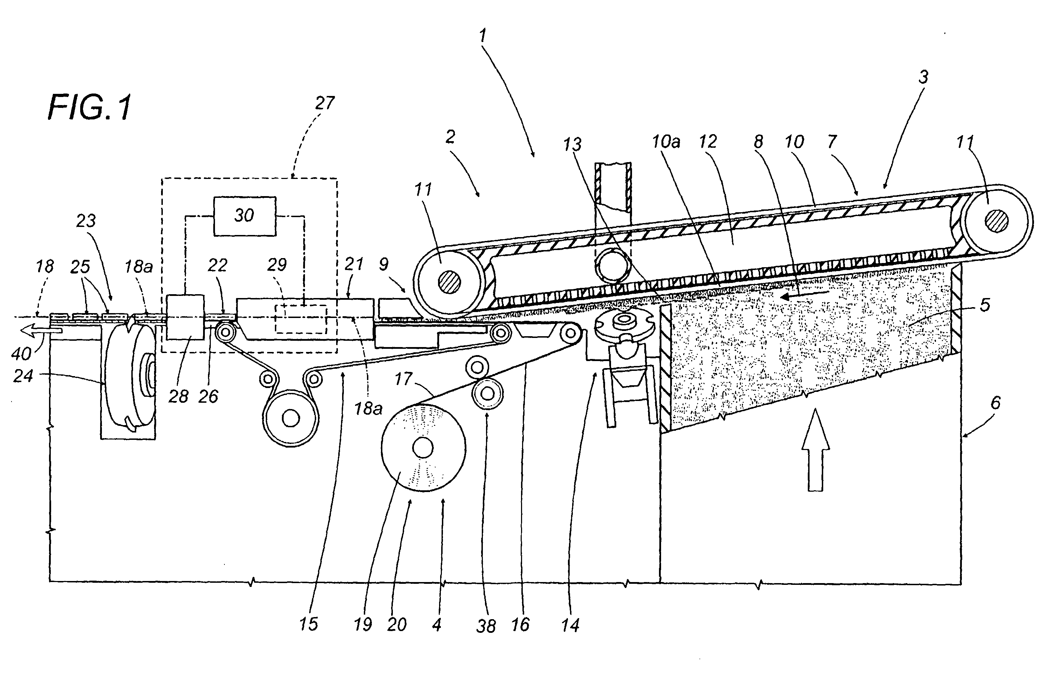

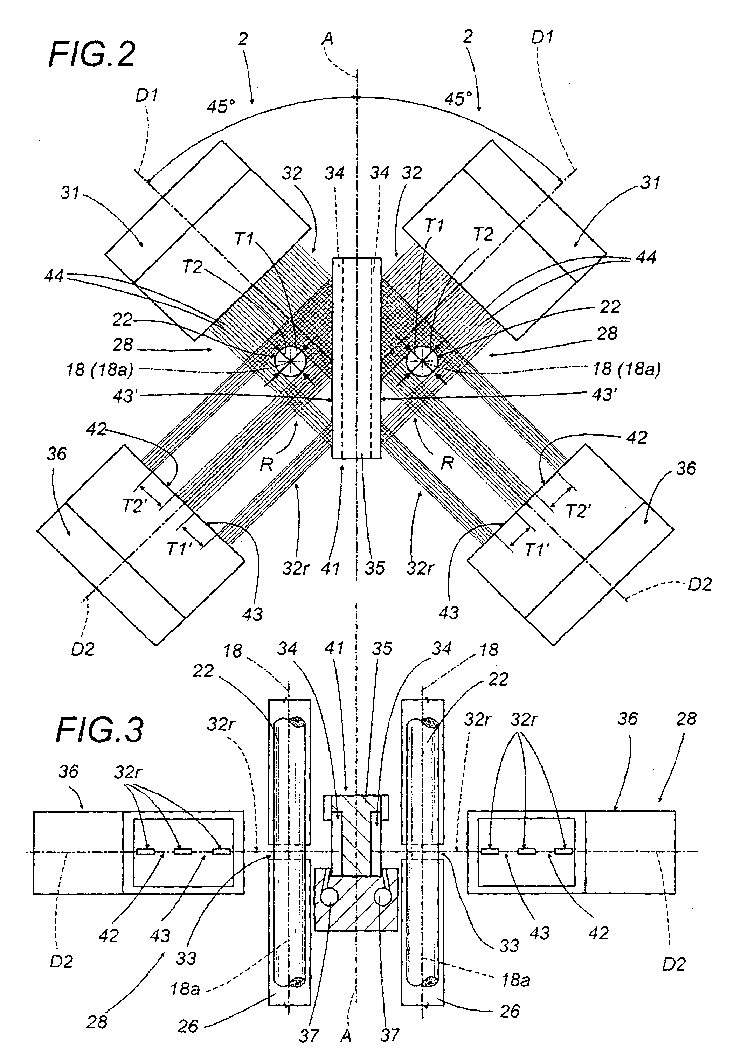

With reference to Fig. 1, the numeral 1 indicates as a whole a cigarette making machine with two twin cigarette making lines (only one of which is illustrated in Fig. 1) working in parallel and placed side by side essentially symmetrical about a vertical plane A (shown in Figs. 2 and 3). In the description which follows, reference will be made to only one of the lines 2 since the two lines, besides being identical, are essentially separate from each other except for a few parts which will be expressly specified below.

With reference to Fig. 1, the line 2 comprises a tobacco feed unit 3 and a paper feed unit 4.

The illustration shows only the end part of the unit 3, comprising an outlet 5 of a chimney 6 which carries the tobacco for both lines upwards, and a conveyor 7 extending along a tobacco feed path 8 between the outlet 5 and a tobacco discharge station 9.

The conveyor 7 comprises a band 10 wound in a loop round two essentially horizontal rollers 11 forming a lower conveyor branch 10a, and a suction chamber 12 located between the two rollers 11 inside the loop and designed to create a vacuum within the chimney 6, through the outlet 5 and a plurality of through holes (not illustrated) made in the band 10, so as to form a continuous rod 13 of tobacco adhering to the branch 10a.

Along the tobacco conveying path 8, underneath the branch 10a, there is a rotary trimming device 14 designed to remove (in known manner) the excess tobacco from the rod 13 so as to give the rod 13 the required profile.

The paper feed unit 4 comprises a conveyor belt 15 designed to hold by suction a tape of cigarette paper 16 and to feed it along a path 18 which passes through the tobacco discharge station 9 where the rod 13 just trimmed is placed on the tape 16. The tape 16 is one of the two longitudinal halves of a tape 17 which is cut through the longitudinal centre line during machine operation by a cutting device 38 (of known type), which serves both lines 2, after being unwound from a bobbin 19 at an unwinding station 20, which also serves both lines 2.

Along the path 18, there is a garniture 21 (of known type) designed to fold the tape 16 around the tobacco rod 13. Along the garniture 21, the two longitudinal edges of the cigarette paper tape 16 are folded over and glued to each around the tobacco (by known means which are not illustrated) in such a way as to form a continuous cigarette rod 22.

Downstream of the garniture 21 in a rod 22 feed direction 40, the path 18 runs through a cut-off station 23 where a rotary cutting device 24, which serves both lines 2, cuts the rod 22 into equal, preset cigarette lengths.

A section 18a of the path 18 between the garniture 21 and the cut-off station 23 is defined by a bracket 26 to guide the rod 22 at which there is located an apparatus for checking and correcting the transverse dimensions of the rod 22. This apparatus, labelled 27 as a whole and illustrated schematically as a block, comprises a checking unit 28, located along the section 18a, a correction device 29 (of known type), located in the area of the garniture 21, and a control unit 30 (also of known type), located between the unit 28 and the device 29 and designed to process the signals generated by the unit 28 and to control the device 29 accordingly.

As shown in Figs. 2 and 3, in which both cigarette rods 22 can be seen in the respective lines 2, each of the two checking units 28 comprises a laser emitting device 31, located opposite the corresponding section 18a on the other side of the plane A and is designed to project a plane-polarized laser beam 32 in a direction D1 that makes a 45° angle with the plane A itself.

Figure 3, in particular, shows that the emitting device 31 is oriented in such a way that the plane-polarized beam 32 it emits strikes the section 18a of the path 18 at right angles through a break 33 in the corresponding bracket 26.

As shown in Figs. 2 and 3, each checking unit 28 also comprises an optical reflecting device 41 consisting of a flat reflecting surface 34 located opposite the corresponding emitting device 31 on the other side of the section 18a.

The surface 34 is parallel to the plane A so that it reflects the corresponding beam 32 to create a reflected beam 32r that is co-planar with the beam 32 and is directed in a direction D2 at right angles to the direction D1 to strike the section 18a of the path 18 at right angles through the opening 33 in the corresponding bracket 26. In particular, the surface 34 defines an outside face of a thin wall 35 common to both lines 2 and whose plane of symmetry is plane A.

Each checking unit 28 also comprises a receiving device 36 located opposite the corresponding surface 34 on the other side of the section 18a.

In each checking unit 28, the beam 32 and the reflected beam 32r have an amplitude of more than twice the estimated diameter of the corresponding rod 22 and overlap in such a way as to form an essentially triangular zone R of intersection crossed by the rod 22.

Each checking unit 28, lastly, comprises a compressed air cleaning device 37 (of known type) supported by the wall 35 and directed at the surface 34 to keep the surface 34 clean.

During machine operation, the band 10 feeds the tobacco rod 13 along the path 8, allowing the rod 13 to pass through the above mentioned trimming device 14 to reach the garniture 21 where the continuous cigarette rod 22 is formed.

As shown in Figs. 1, 2 and 3, as the continuous cigarette rod 22 leaves the garniture 21, moving along the path 18 in the direction 40, it reaches the aforesaid checking unit 28 and crosses the zone R of intersection of the beam 32 emitted by the device 31 and the corresponding beam 32r reflected by the surface 34.

As shown by Fig. 2 in particular, where the rod 22 crosses the zone R, it casts two separate shadows 42 and 43 in the reflected beam 32r. This is because when the rod 22 crosses the said zone R, it is struck by a portion of the beam 32 emitted by the emitting device 31 in the first direction D1 and, simultaneously, by a portion of the beam 32r reflected by the surface 34 in a second direction D2 and, consequently, creates a break both in the beam 32 and in the reflected beam 32r.

The break in the beam 32 produces on the reflecting surface 34 a shadow zone, labelled 43, which is reflected by the surface 34 to reach the receiving device 36 in the form of a projected shadow 43. The break in the portion of reflected beam 32r, on the other hand, produces a shadow zone 42 directly on the receiving device 36.

In the embodiment illustrated in Fig. 2, the transverse amplitude T1' of the projected shadow 43 is equal to the transverse dimension of a first diameter T1 of the rod 22 measured across the direction D1, while the transverse amplitude T2' of the shadow 42 is equal to a second diameter T2 of the rod 22, at right angles to the first, measured across the direction D2.

The receiving device 36, on receiving the beam 32r, outputs two signals, corresponding to the shadows 42 and 43 to the control unit 30 which, after calculating the diameter of the rod 22 or the two diameters T1 and T2, as shown in Fig. 2, compares the diameters with a preset reference value and, if necessary, controls the correction device 29.

On leaving the checking unit 28, the rod 22 is fed to the cut-off station 23 where the rotary cutting device 24 cuts it into the individual cigarette lengths 25.

In another embodiment, the checking unit 28 may envisage that the emitting device 31 emits a beam 32 of electromagnetic waves consisting of a plurality of individual parallel rays 44 emitted in succession according to a defined temporal scanning which makes it possible to identify the transverse dimensions T1 and T2 of the continuous cigarette rod 22 by measuring the two time intervals during which the reflected beam 32r is broken.

## Claims

1. A cigarette making machine comprising:
one garniture for making continuous rods (22) which are fed along a defined feed path (18, 18a) and in a defined direction (40);
an apparatus for checking and correcting the transverse dimensions of the continuous rods (22) comprising a correction device (29) located in the area of the garniture (21), such apparatus also comprising a control unit (30) for managing the checking and correcting operations
and a unit for checking the transverse dimensions of the continuous rods (22) of tobacco presenting at least one device (31) that emits electromagnetic waves and that is designed to direct a beam (32) of electromagnetic waves in a first given direction (D1) transverse to the path (18, 18a) and at least one receiving device (36) associated with the emitter device (31),
the cigarette making machine being **characterized in that** the unit for checking the transverse dimensions comprises means (41, 34) for reflecting the beam (32) emitted by the emitter device (31) to the receiving device (36), the reflecting means (41, 34) being located opposite the emitter device (31) on the other side of the feed path (18, 18a) and the control unit (30) being operatively located between the unit (28) and the correcting device (29) to process the signals generated by the unit (28) and to control the correcting device (29) accordingly.

2. The machine according to claim 1 **characterized in that** the reflecting means (41, 34) is arranged opposite to the receiving device (36) to reflect at least two separate transverse dimensions(T1, T2) of the said products (22) on said receiving device (36).

3. The machine according to claim 1 or 2 **characterized in that** the said emitting and receiving devices (31, 36) are located on the same side of the path (18, 18a) as the said emitting device (31).

4. The machine according to claim 3 **characterized in that** the said reflecting means (41, 34) produce at least one reflected beam (32r) of electromagntic waves in a second given direction (D2); the said receiving device (36) being located on the trajectory of the said reflected beam (32r).

5. The machine according to any of the foregoing claims from 1 to 4 **characterized in that** the said beam (32) produced by the emitting device (31) and the said reflected beam (32r) produced by the reflecting means (41, 34) are essentially plane-polarized beams, both transverse to the said path (18, 18a).

6. The machine according to any of the foregoing claims from 1 to 5 **characterized in that** the said beam (32) produced by the emitting device (31) and the said reflected beam (32r) produced by the reflecting means (41, 34) are essentially co-planar and form an essentially triangular zone (R) of intersection, the said path (18, 18a) crossing the said emitted and reflected beams (32, 32r) within the said zone (R) of intersection.

7. The machine according to claim 5 **characterized in that** the said beam (32) produced by the emitting device (31) has an amplitude, measured transversely to the said first given direction (D1), that is more than twice the transverse dimension (T1, T2) of the said products (22).

8. The machine according to any of the foregoing claims from 4 to 7 **characterized in that** the said first direction (D1) and the said second direction (D2) are essentially at right angles to each other.

9. The machine according to any of the foregoing claims from 1 to 8 **characterized in that** the said reflecting means (41, 34) comprise at least one wall (35) with a flat reflecting surface (34) that is essentially parallel to the said path (18, 18a) along the said given feed direction (40) of the said products (22)

10. The machine according to any of the foregoing claims from 1 to 9 **characterized in that** the said receiving device (36) is designed to check, within the beam (32r) of waves reflected by the said reflecting means (41, 34), two separate shadows (42, 43) defined by the incidence upon the said products (22) of the beam (32) of waves produced by the said emitting device (31) and of the beam (32r) of waves reflected by the said reflecting means (41, 34), each shadow corresponding to a transverse dimension (T1, T2) of the products (22) themselves.

11. The machine according to any of the foregoing claims from 1 to 10 **characterized in that** the said beam (32) of electromagnetic waves produced by the said emitting device (31) consists of a plurality of individual parallel rays (44) emitted in succession according to a defined temporal scanning.

12. The machine according to any of the foregoing claims from 1 to 11 **characterized in that** it comprises means (37) for cleaning the said reflecting means (41, 34).

13. The machine according to claim 12 **characterized in that** the said cleaning means (37) are of the compressed air type.

14. The machine according to any of the foregoing claims from 1 to 13 **characterized in that** the said emitting device (31) emits a laser beam (32).

15. A unit for checking the transverse dimensions of bar-shaped products as they move along two separate given feed paths (18, 18a) in a given common direction (40), **characterized in that** it comprises reflecting means (41, 34) located between the said two paths (18, 18a) and comprising, for each of the two paths (18, 18a), a flat reflecting surface (34) facing a respective path (18, 18a) and also **characterized in that** it comprises, opposite the reflecting surface (34) on the other side of the related path (18, 18a), a device (31) that emits a beam (32) of electromagnetic waves and a device (36) that receives a beam (32r) of the electromagnetic waves reflected by the reflecting surface (34) in order to check the transverse dimensions (T1, T2) of a product (22).

16. The checking unit according to claim 15 **characterized in that** it has a structure that is essentially symmetrical about a plane of symmetry (A) located between the said two paths (18, 18a) and parallel to the said reflecting surfaces (34).

17. A twin-line cigarette or cigarette filter making machine in which two separate cigarette or cigarette filter rods are fed along two separate given feed paths (18, 18a) in a given common direction (40) **characterized in that** for each individual rod (22) it comprises a checking unit (28) as claimed in any of the foregoing claims 15 and 16.

## Patentansprüche

1. Herstellungsmaschine für Zigaretten, enthaltend:
ein Zubehör zur Herstellung von kontinuierlichen Strängen (22), welche entlang einer vorgegebenen Zuführbahn (18, 18a) und in einer festgelegten Richtung (40) zugeführt werden;
eine Vorrichtung zur Kontrolle und zur Korrektur der Querabmessungen der kontinuierlichen Stränge (22), enthaltend eine Korrekturvorrichtung (29), die im Bereich des Zubehörs (21) angeordnet ist, wobei solche Vorrichtung ebenfalls eine Steuereinheit (30) zum Verwalten der Kontroll- und Korrekturabläufe enthält;
und eine Einheit zur Überprüfung der Querabmessungen der kontinuierlichen Stränge (22) aus Tabak, die wenigstens eine Vorrichtung (31) aufweist, welche elektromagnetische Wellen aussendet und dazu bestimmt ist, ein Bündel (32) von elektromagnetischen Wellen in eine bestimmte Richtung (D1) quer zu der Bahn (18, 18a) zu leiten, und wenigstens eine Empfangsvorrichtung (36), die der Emissionsvorrichtung (31) zugeordnet ist;
wobei die Herstellungsmaschine für Zigaretten **dadurch gekennzeichnet ist**, das die Einheit zur Überprüfung der Querabmessungen Mittel (41, 34) zur Reflexion des durch die Emissionsvorrichtung (31) an die Empfangsvorrichtung (36) ausgesandten Bündels (32) enthält, wobei die Reflexionsmittel (41, 34) gegenüberliegend der Emissionsvorrichtung (31) auf der anderen Seite der Zuführbahn (18, 18a) angeordnet sind, und wobei die Steuereinheit (30) betrieblich zwischen der Einheit (28) und der Korrekturvorrichtung (29) angeordnet ist, um die durch die Einheit (28) erzeugten Signale zu verarbeiten und danach die Korrekturvorrichtung (29) zu steuern.

2. Maschine nach Patentanspruch 1, **dadurch gekennzeichnet, dass** die Reflexionsmittel (41, 34) gegenüberliegend der Empfangsvorrichtung (36) angeordnet sind, um wenigstens zwei getrennte Querabmessungen (T1, T2) der genannten Produkte (22) auf die genannte Empfangsvorrichtung (36) zu reflektieren.

3. Maschine nach Patentanspruch 1 oder 2, **dadurch gekennzeichnet, dass** die genannten Emissions- und Empfangsvorrichtungen (31, 36) auf der gleichen Seite der Bahn (18, 18a) angeordnet sind wie die genannte Emissionsvorrichtung (31).

4. Maschine nach Patentanspruch 3, **dadurch gekennzeichnet, dass** die genannten Reflexionsmittel (41, 34) wenigstens ein reflektiertes Bündel (32r) von elektromagnetischen Wellen in einer zweiten bestimmten Richtung (D2) erzeugen; wobei die genannte Empfangsvorrichtung (36) an der Bahn des genannten reflektierten Bündels (32r) angeordnet ist.

5. Maschine nach einem beliebigen der vorstehenden Patentansprüche von 1 bis 4, **dadurch gekennzeichnet, dass** das genannte, durch die Emissionsvorrichtung (31) erzeugte Bündel (32) und das genannte, durch die Reflexionsmittel (41, 34) erzeugte reflektierte Bündel (32r) im wesentlichen linearpolarisierte Bündel sind, beide quer zu der genannten Bahn (18, 18a).

6. Maschine nach einem beliebigen der vorstehenden Patentansprüche von 1 bis 5, **dadurch gekennzeichnet, dass** das genannte, durch die Emissionsvorrichtung (31) erzeugte Bündel (32) und das genannte, durch die Reflexionsmittel (41, 34) erzeugte reflektierte Bündel (32r) im wesentlichen koplanar sind und einen im wesentlichen dreieckigen Überschneidungsbereich (R) bilden, wobei die genannte Bahn (18, 18a) die genannten emittierten und reflektierten Bündel (32, 32r) innerhalb des genannten Überschneidungsbereiches (R) kreuzt.

7. Maschine nach Patentanspruch 5, **dadurch gekennzeichnet, dass** das genannte, durch die Emissionsvorrichtung (31) erzeugte Bündel (32) eine Breite hat, gemessen quer zu der genannten ersten bestimmten Richtung (D1), die mehr als das Doppelte der Querabmessung (T1, T2) der genannten Produkte (22) beträgt.

8. Maschine nach einem beliebigen der vorstehenden Patentansprüche von 4 bis 7, **dadurch gekennzeichnet, dass** die genannte erste Richtung (D1) und die genannte zweite Richtung (D2) im wesentlichen rechtwinklig zueinander verlaufen.

9. Maschine nach einem beliebigen der vorstehenden Patentansprüche von 1 bis 8, **dadurch gekennzeichnet, dass** die genannten Reflexionsmittel (41, 34) wenigstens eine Wand (35) mit einer flachen reflektierenden Oberfläche (34) enthalten, die im wesentlichen parallel zu der genannten Bahn (18, 18a) entlang der genannten vorgegebenen Zuführrichtung (40) der genannten Produkte (22) ausgerichtet ist.

10. Maschine nach einem beliebigen der vorstehenden Patentansprüche von 1 bis 9, **dadurch gekennzeichnet, dass** die genannte Empfangsvorrichtung (36) dazu bestimmt ist, innerhalb des durch die genannten Reflexionsmittel (41, 34) reflektierten Bündels (32r) von Wellen zwei getrennte Schatten (42, 43) zu erfassen, beschrieben durch den Einfall des durch die genannte Emissionsvorrichtung (31) erzeugten Bündels (32) von Wellen und des durch die genannten Reflexionsmittel (41, 34) reflektierten Bündels (32r) von Wellen auf die genannten Produkte (22), wobei jeder Schatten einer Querabmessung (T1, T2) der Produkte (22) selbst entspricht.

11. Maschine nach einem beliebigen der vorstehenden Patentansprüche von 1 bis 10, **dadurch gekennzeichnet, dass** das genannte Bündel (32) von elektromagnetischen Wellen, erzeugt durch die genannte Emissionsvorrichtung (31), aus einer Anzahl von einzelnen parallelen Strahlen (44) besteht, ausgesandt in einer Folge nach einer festgelegten zeitlichen Abtastung.

12. Maschine nach einem beliebigen der vorstehenden Patentansprüche von 1 bis 11, **dadurch gekennzeichnet, dass** sie Mittel (37) zum Reinigen der genannten Reflexionsmittel (41, 34) enthält.

13. Maschine nach Patentanspruch 12, **dadurch gekennzeichnet, dass** die genannten Reinigungsmittel (37) von einem mit Druckluft arbeitenden Typ sind.

14. Maschine nach einem beliebigen der vorstehenden Patentansprüche von 1 bis 13, **dadurch gekennzeichnet, dass** die genannte Emissionsvorrichtung (31) ein Laserbündel (32) aussendet.

15. Einheit zur Überprüfung der Querabmessungen von strangförmigen Produkten, die entlang von zwei getrennten vorgegebenen Zuführbahnen (18, 18a) in einer bestimmten gemeinsamen Richtung (40) vorlaufen, **dadurch gekennzeichnet, dass** sie Reflexionsmittel (41, 34) enthält, angeordnet zwischen den genannten beiden Bahnen (18, 18a) und enthaltend für jede der beiden Bahnen (18, 18a) eine flache reflektierende Oberfläche (34), die einer jeweiligen Bahn (18, 18a) zugewandt ist, und ebenfalls **dadurch gekennzeichnet, dass** sie der reflektierenden Oberfläche (34) gegenüberliegend auf der anderen Seite der betreffenden Bahn (18, 18a) eine Vorrichtung (31) enthält, welche ein Bündel (32) von elektromagnetischen Wellen aussendet, und eine Vorrichtung (36), welche ein Bündel (32r) von elektromagnetischen Wellen empfängt, reflektiert durch die reflektierende Oberfläche (34), um die Querabmessungen (T1, T2) eines Produktes (22) zu überprüfen.

16. Kontrolleinheit nach Patentanspruch 15, **dadurch gekennzeichnet, dass** sie eine Struktur hat, die im wesentlichen symmetrisch zu einer Symmetrieebene (A) ist, angeordnet zwischen den genannten beiden Bahnen (18, 18a) und parallel zu den genannten reflektierenden Oberflächen (34).

17. Doppellinien-Maschine zur Herstellung von Zigaretten oder Zigarettenfiltern, in welcher zwei getrennte Stränge von Zigaretten oder Zigarettenfiltern entlang von zwei getrennten vorgegebenen Zuführbahnen (18, 18a) in einer bestimmten gemeinsamen Richtung (40) vorgeschoben werden, **dadurch gekennzeichnet, dass** sie für jeden einzelnen Strang (22) eine Kontrolleinheit (28) enthält, wie sie in einem beliebigen der vorstehenden Patentansprüche 15 und 16 festgelegt ist.

## Revendications

1. Une machine à fabriquer les cigarettes comprenant :
un élément de formation de tiges continues (22) qui sont alimentées le long d'un parcours d'avancement (18, 18a) déterminé et dans une direction (40) déterminée ;
un appareil pour vérifier et corriger les dimensions transversales des tiges continues (22) comprenant un dispositif de correction (29) situé dans la zone de l'élément de formation (21), cet appareil comprenant également une unité de contrôle (30) pour gérer les opérations de vérification et de correction
et une unité pour la vérification des dimensions transversales des tiges continues (22) de tabac présentant au moins un dispositif (31) qui émet des ondes électromagnétiques et qui est destiné à diriger un faisceau (32) d'ondes électromagnétiques dans une première direction donnée (D1) transversale au parcours (18, 18a), et au moins un dispositif récepteur (36) associé au dispositif émetteur (31),
la machine à fabriquer les cigarettes étant **caractérisée en ce que** l'unité de vérification des dimensions transversales comprend des moyens (41, 34) pour réfléchir le faisceau (32) émis par le dispositif émetteur (31) vers le dispositif récepteur (36), les moyens de réflexion (41, 34) étant situés en face du dispositif émetteur (31) de l'autre côté du parcours d'avancement (18, 18a) et l'unité de contrôle (30) étant opérationnellement située entre l'unité (28) et le dispositif de correction (29) pour traiter les signaux générés par l'unité (28) et pour commander en conséquence le dispositif de correction (29).

2. La machine selon la revendication 1, **caractérisée en ce que** les moyens de réflexion (41, 34) sont disposés en face du dispositif récepteur (36) pour réfléchir au moins deux dimensions transversales distinctes (T1, T2) desdits produits (22) sur ledit dispositif récepteur (36).

3. La machine selon la revendication 1 ou 2, **caractérisée en ce que** lesdits dispositifs émetteur et récepteur (31, 36) sont situés du même côté du parcours (18, 18a) que ledit dispositif émetteur (31).

4. La machine selon la revendication 3, **caractérisée en ce que** lesdits moyens de réflexion (41, 34) génèrent au moins un faisceau réfléchi (32r) d'ondes électromagnétiques dans une seconde direction donnée (D2) ; ledit dispositif récepteur (36) étant situé sur la trajectoire dudit faisceau réfléchi (32r).

5. La machine selon l'une quelconque des revendications précédentes de 1 à 4, **caractérisée en ce que** ledit faisceau (32) émis par le dispositif émetteur (31) et ledit faisceau réfléchi (32r) généré par les moyens de réflexion (41, 34) sont essentiellement des faisceaux plans polarisés, tous deux transversaux audit parcours (18, 18a).

6. La machine selon l'une quelconque des revendications précédentes de 1 à 5, **caractérisée en ce que** ledit faisceau (32) émis par le dispositif émetteur (31) et ledit faisceau réfléchi (32r) généré par les moyens de réflexion (41, 34) sont essentiellement coplanaires et forment une zone d'intersection (R) essentiellement triangulaire, ledit parcours (18, 18a) coupant lesdits faisceaux émis et réfléchi (32, 32r) à l'intérieur de ladite zone d'intersection (R).

7. La machine selon la revendication 5, **caractérisée en ce que** ledit faisceau (32) émis par le dispositif émetteur (31) a une amplitude, mesurée transversalement à ladite première direction donnée (D1), qui est supérieure au double de la dimension transversale (T1, T2) desdits produits (22).

8. La machine selon l'une quelconque des revendications précédentes de 4 à 7, **caractérisée en ce que** ladite première direction (D1) et ladite seconde direction (D2) sont essentiellement orthogonales l'une par rapport à l'autre.

9. La machine selon l'une quelconque des revendications précédentes de 1 à 8, **caractérisée en ce que** lesdits moyens de réflexion (41, 34) comprennent au moins une paroi (35) ayant une surface plane de réflexion (34) qui est essentiellement parallèle audit parcours (18, 18a) le long de ladite direction donnée (40) d'avancement desdits produits (22).

10. La machine selon l'une quelconque des revendications précédentes de 1 à 9, **caractérisée en ce que** ledit dispositif récepteur (36) est destiné à vérifier, à l'intérieur du faisceau (32r) d'ondes réfléchies par lesdits moyens de réflexion (41, 34), deux ombres distinctes (42, 43) définies par l'incidence sur lesdits produits (22) du faisceau (32) d'ondes émis par ledit dispositif émetteur (31) et du faisceau (32r) d'ondes réfléchies par lesdits moyens de réflexion (41, 34), chaque ombre correspondant à une dimension transversale (T1, T2) des produits (22) eux-mêmes.

11. La machine selon l'une quelconque des revendications précédentes de 1 à 10, **caractérisée en ce que** ledit faisceau (32) d'ondes électromagnétiques émis par ledit dispositif émetteur (31) consiste en une pluralité de rayons unitaires parallèles (44) émis en succession selon un balayage temporel défini.

12. La machine selon l'une quelconque des revendications précédentes de 1 à 11, **caractérisée en ce qu'**elle comprend des moyens (37) pour nettoyer lesdits moyens de réflexion (41, 34).

13. La machine selon la revendication 12, **caractérisée en ce que** lesdits moyens de nettoyage (37) sont du type à air comprimé.

14. La machine selon l'une quelconque des revendications précédentes de 1 à 13, **caractérisée en ce que** ledit dispositif émetteur (31) émet un faisceau laser (32).

15. Une unité pour la vérification des dimensions transversales de produits en forme de tige durant l'avancement de ces derniers le long de deux parcours d'avancement donnés distincts (18, 18a) dans une direction donnée commune (40), **caractérisée en ce qu'**elle comprend des moyens de réflexion (41, 34) situés entre lesdits deux parcours (18, 18a) et comprenant, pour chacun des deux parcours (18, 18a), une surface plane de réflexion (34) orientée vers un parcours (18, 18a) respectif, et également **caractérisée en ce qu'**elle comprend, en face de la surface de réflexion (34) de l'autre côté du parcours (18, 18a) correspondant, un dispositif (31) qui émet un faisceau (32) d'ondes électromagnétiques et un dispositif (36) qui reçoit un faisceau (32r) d'ondes électromagnétiques réfléchies par la surface de réflexion (34) de manière à vérifier les dimensions transversales (T1, T2) d'un produit (22).

16. L'unité de vérification selon la revendication 15, **caractérisée en ce qu'**elle présente une structure qui est essentiellement symétrique par rapport à un plan de symétrie (A) situé entre lesdits deux parcours (18, 18a) et parallèle aux surfaces de réflexion (34) susmentionnées.

17. Une machine à fabriquer les cigarettes ou les filtres de cigarette à double ligne, dans laquelle deux tiges distinctes de cigarette ou de filtre de cigarette sont alimentées le long de deux parcours d'avancement donnés distincts (18, 18a) dans une direction donnée commune (40), **caractérisée en ce qu'**elle comprend, pour chaque tige (22) individuelle, une unité de vérification (28) telle que définie dans l'une quelconque des revendications précédentes 15 et 16.
